# EUROPÄISCHE PATENTSCHRIFT

(11) **EP 3 420 797 B1**
(45) Veröffentlichungstag und Bekanntmachung des Hinweises auf die Patenterteilung: **08.12.2021**
(21) Anmeldenummer: 18177091.8
(22) Anmeldetag: 11.06.2018
(51) Int. Cl.: A01D 41/14

(54) **AUS MEHREREN SEKTIONEN ZUSAMMENGESETZTES SCHNEIDWERK MIT KNICKSCHUTZ UND VERFAHREN ZUR HÖHENREGELUNG DES SCHNEIDWERKS**
MULTI-SECTION COMPOSITE CUTTING DEVICE WITH ANTI-KINK ELEMENT AND METHOD FOR ADJUSTING THE HEIGHT OF A CUTTING DEVICE
OUTIL DE COUPE COMPOSÉ DE PLUSIEURS SECTIONS POURVU DE PROTECTION ANTIPLIURE ET PROCÉDÉ DE RÉGLAGE EN HAUTEUR DE L'OUTIL DE COUPE

(30) Priorität: 21.06.2017 DE 102017113776
(43) Veröffentlichungstag der Anmeldung: 02.01.2019
(73) Patentinhaber: Carl Geringhoff GmbH & Co. KG, 59227 Ahlen (DE)
(72) Erfinder: SCHULZE SELTING, Stephan, 59320 Enningerloh (DE); SUDHUES, Steffen, 59227 Ahlen (DE); SCHULZE RÜCKAMP, Jan, 59320 Enningerloh (DE); SCHARMANN, Jochen, 48231 Warendorf (DE); STÜCKMANN, Raphael, 48317 Drensteinfurt (DE)
(74) Vertreter: Weeg, Thomas

(56) Entgegenhaltungen:
- EP-A1- 2 832 206
- EP-A2- 3 087 819
- US-B2- 9 198 349

## Beschreibung

Die vorliegende Erfindung bezieht sich auf ein Schneidwerk nach den Merkmalen des Oberbegriffs des Anspruchs 1.

Aus der Schrift US 9,198,349 B2 ist ein aus mehreren Sektionen zusammengesetztes Schneidwerk bekannt. Die Höhenlage des Schneidwerks wird primär verändert über eine Verstellung der Tragvorrichtung der Erntemaschine, im Ausführungsbeispiel einem Mähdrescher als einer Erntemaschine mit einem Schrägförderkanal als einer Tragvorrichtung. Am Schrägförderkanal, der für sich an seinem vorderen Ende höhenverstellbar ist, befinden sich üblicherweise Aufnahmen für ein Schneidwerk, die eine zusätzliche Höhenverstellung ermöglichen, wie beispielsweise stehende Hydraulikzylinder, auf denen das Schneidwerk ruht. Diese Hydraulikzylinder sind im Sinne dieser Erfindung ein möglicher Bestandteil der Tragvorrichtung, mit der die Höhenverstellung des Schneidwerks während der Ernte auch oder ergänzend bewirkt werden kann. Eine Tragvorrichtung kann also mehrere Verstellmöglichkeiten aufweisen, die Arbeitshöhe eines Schneidwerks einzustellen, nämlich beispielsweise über die Höhenverstellung des Schrägförderers und über die zusätzlichen verstellbaren Tragzylinder, die insbesondere für eine Verdrehung des Schneidwerks um die Längsmittelachse genutzt werden können.

Die Höhenverstellung ist erforderlich, um die Höhenlage des Schneidwerks an sich bei der Vorfahrt der Erntemaschine bei unebenen Bodenverhältnissen laufend verändernde Abstände des Schneidwerks zum Boden anzupassen. Ist das Schneidwerk zu hoch, kann das Erntegut zu hoch oder gar nicht mehr geschnitten werden, woraus sich unerwünschte Erntegutverluste ergeben. Ist das Schneidwerk zu tief eingestellt, so drohen Beschädigungen am Schneidwerk wegen einer Kollision von Bauteilen des Schneidwerks mit dem Boden.

Bei größeren Arbeitsbreiten der Schneidwerke ist es nicht mehr ausreichend, die Höhe des Schneidwerks nur durch eine Höhenverstellung über die Tragvorrichtung auf einen gewünschten Abstand zum Boden einzustellen. Bei größeren Arbeitsbreiten kann der Boden auch in Querrichtung zur Fahrtrichtung der Erntemaschine über die Arbeitsbreite hinweg derartige Höhenunterschiede zur Waagerechten aufweisen, dass eine von der Mittelsektion separate Höhenanpassung der seitlichen Sektionen des Schneidwerks erforderlich wird. Beim Schneidwerk aus der Schrift US 9,198,349 B2 ist das gelöst durch eine motorische Verstellung des Knickwinkels zwischen der Mittelsektion und der jeweiligen seitlichen Sektion, die jeweils in Abhängigkeit von einem durch Sensoren ermittelten Abstand der seitlichen Sektion zum Boden erfolgt. Die motorische Verstellung der Schwenkstellung der seitlichen Sektionen erfolgt über Hydraulikzylinder, in denen der Druck auf einem konstanten Level gehalten werden soll. Bei den laufenden Verstellungen der Hydraulikzylinder stellen sich entsprechend veränderliche Knickwinkel der Querachsen der seitlichen Sektionen im Verhältnis zur Querachse der Mittelsektion ein.

Aus der gattungsgemäßen Schrift EP 3 087 819 A2 ist es bekannt, entgegen der Vorfahrtrichtung - also in der horizontalen Richtung - auf das Schneidwerk einwirkende Kräfte über Sensoren zu messen, die den Druck in den Hydraulikleitungen messen, über die die Schwenklagen der seitlichen Sektionen des Schneidwerks verstellbar sind, und bei ansteigenden Sensorwerten die Schwenklage der seitlichen Schneidwerksteile im Verhältnis zum Mittelteil des Schneidwerks so zu verändern, dass sich die einwirkenden Kräfte wieder verringern. Diese Vorgehensweise ist nachteilig, weil die Lageveränderung der seitlichen Schneidwerksteile relativ zum Boden erst dann begonnen wird, wenn die Sensoren bereits einen Anstieg der einwirkenden Kräfte messen. Es wird also nur bereits eingetretenen und von den Sensoren erfassten Druckerhöhungen im Hydraulikkreislauf hinterhergeregelt. Bevor nun die seitlichen Schneidwerksteile in eine unkritische Höhenlage verstellt worden sind, kann bereits ein Schaden am Schneidwerk eingetreten sein. Auch wenn kein direkter Schaden eintritt, ist das Schneidwerk durch die dauernden Lastwechsel einem erhöhten Verschleiß unterworfen. Das Mittelteil des Schneidwerks bleibt bei dieser Art einer Höhenverstellung unberücksichtigt.

Aus dem Stand der Technik ist außerdem ein Schneidwerk bekannt, das von der Firma Geringhoff hergestellt und unter der Bezeichnung "Truflex" vertrieben wird. Bei diesem Schneidwerk sind die seitlichen Sektionen über ein Radfahrwerk auf dem Boden abgestützt. Die Höhenlage der Mittelsektion wird auch hier über die sensorgestützte Verstellung der Tragvorrichtung der Erntemaschine an wechselnde Bodenabstände angepasst. Die Signale zur Höhenverstellung werden über Tastbügel ermittelt, die den Abstand zum Boden messen. Da die seitlichen Sektionen mit der Mittelsektion jeweils über ein Gelenk verbunden sind, dessen Gelenkachse in die Fahrtrichtung der Erntemaschine weist, und die seitlichen Sektionen zum Boden hin über ein eigenes Fahrwerk abgestützt sind, können die seitlichen Sektionen jeweils über das Fahrwerk die Bodenkontur kopieren und sich dabei laufend auf einen individuellen Abstand der jeweiligen seitlichen Sektion zum Boden einstellen, der einem akzeptablen Abstand im Bereich des Fahrwerks entspricht. Das Fahrwerk ist bei diesem Schneidwerk ebenfalls höhenverstellbar, wobei die Höhenverstellung entsprechend der Sensorsignale der zugehörigen Bodentaster erfolgt. Gleichwohl ergeben sich hier insbesondere bei unebenen Bodenverhältnissen laufend veränderliche Knickwinkel der Querachsen der seitlichen Sektionen im Verhältnis zur Querachse der Mittelsektion.

Bei den bekannten Schneidwerken stellt sich das Problem, dass die Beweglichkeit der seitlichen Sektionen im Verhältnis zur Mittelsektion technisch begrenzt ist. Werden die technischen Grenzen erreicht, wirken erhöhte Lasten auf die gelenkigen Verbindungen ein. Das gilt insbesondere dann, wenn die Geländekontur eigentlich eine weitere Höhenanpassung der seitlichen Sektionen, sei es nach unten oder oben, erfordern würde, das aber wegen der technischen Grenzen der gelenkigen Verbindungen nicht möglich ist. Dann besteht die Gefahr, dass die betreffende seitliche Sektion bei der weiteren Vorfahrt der Erntemaschine in den Boden gerammt wird und/oder Bauteile der gelenkigen Verbindungen verbogen und beschädigt werden. Auch kann sich das Schneidwerk auf den Boden aufschieben, wodurch die Tragvorrichtung mit der damit verbundenen Erntemaschine angehoben werden könnte. Das kann zu erheblichen Beschädigungen der Tragvorrichtung führen.

Es ist die Aufgabe der vorliegenden Erfindung, die Gefahr von Beschädigungen des Schneidwerks und der Bauteile der gelenkigen Verbindungen zu verringern.

Die Aufgabe wird für eine gattungsgemäßes Schneidwerk mit den kennzeichnenden Merkmalen des Anspruchs 1 gelöst.

Die Aufgabe wird für ein Verfahren zur Höhenregelung eines gattungsgemäßes Schneidwerk mit den kennzeichnenden Merkmalen des Anspruchs 5 gelöst.

Mit dem sensorgesteuerten Knickschutz ist es möglich, die Höhenregelung des Schneidwerks im Korrekturmodus so zu korrigieren, dass die Höhenregelung des Schneidwerks das Schneidwerk nicht mehr so verstellt, dass dabei die Knickung der Komponenten der gelenkigen Verbindung und des Rahmens der seitlichen Sektionen und der Mittelsektion zusätzlich belastet wird. Der Knickschutz über die Höhensteuerung der Mittelsektion kann dabei unabhängig davon erfolgen, ob die seitlichen Sektionen mit einem Radfahrwerk ausgestattet sind, über Hydraulikzylinder als Stellmotoren in ihrer Schwenkstellung verstellbar sind oder eine sonstige aktive oder passive Höhenlageregelung besteht. Dadurch, dass bei als kritisch erkannten Knickwinkeln die Höhenverstellung der Mittelsektion aktiviert wird, ist das Risiko stark vermindert, dass es bei der Ernte zu lageregelungs- und knickwinkelanschlagsbedingten Störungen im Ernteablauf kommt.

Der Sensor zur Überwachung der Verschwenkung kann ein einfacher mechanischer, elektrischer oder elektronischer Schalter sein, der jeweils ein Schaltsignal übermittelt, wenn die seitliche Sektion bei ihrer Verschwenkbewegung gegen einen Anschlag schlägt. Er kann aber auch als Drehwinkelsensor wie beispielsweise ein Potentiometer ausgebildet sein, der getaktet oder kontinuierlich Schwenkwinkel misst und diese an die Auswertevorrichtung übermittelt. Verfügt das Schneidwerk über zwei seitliche Sektionen, die mit der Mittelsektion verbunden sind, so wird vorteilhaft die Bewegung jeder seitlichen Sektion mit einem eigenen Sensor überwacht.

Der Grenzwert, bei dem ein Sensorsignal übermittelt wird, kann dem mechanischen Anschlag entsprechen, bei dem die mechanische Beweglichkeit der gelenkigen Verbindung endet. Der Grenzwert kann aber auch dort definiert sein, wo die Verschwenkbewegung der seitlichen Sektion den mechanischen Anschlag noch nicht, aber nahezu erreicht hat. Es kann also auch ein virtueller Anschlag definiert sein, der nicht dem mechanischen Anschlag entspricht. Wenn der Grenzwert kurz vor dem Erreichen des mechanischen Anschlags definiert wird, hat die Auswertevorrichtung noch Zeit, die Tragvorrichtung im Korrekturmodus anzusteuern und das Mittelsektion je nach Bedarf anzuheben oder abzusenken, so dass der Anschlag entweder nicht mehr erreicht wird oder die Anschlagbewegung der seitlichen Sektion nicht mehr so hart ausfällt, wie sie ausfallen würde, wenn die Tragvorrichtung das Mittelsektion im Korrekturmodus nicht schon angehoben oder abgesenkt hätte.

Die Kommunikation zwischen dem Sensor und der Auswertevorrichtung kann beliebig ausgestaltet sein, beispielsweise über ein herkömmliches Kupfer- oder Glasfaserkabel oder über eine Funkverbindung.

Der Korrekturmodus zeichnet sich dadurch aus, dass in ihm die Bestimmung der Soll-Höhenlage der Mittelsektion zur Erntemaschine und zum Boden nicht mehr nur in der Auswertevorrichtung in Abhängigkeit der den Bodenabstand laufend ermittelnden Sensoren erfolgt, sondern die Sensorwerte des die Verschwenkbewegung messenden Sensors zumindest in die Berechnung von Stellgrößen zur Verstellung der Tragvorrichtung einfließen, um die aus dem Stand der Technik bekannten Nachteile zu vermeiden.

Wenn das freie Ende einer seitlichen Sektion so weit nach unten verschwenkt ist, dass der Sensor das Erreichen des Grenzwerts meldet, so hängt das freie Ende dieser seitlichen Sektion mit hoher Wahrscheinlichkeit in der Luft, und ihr volles Gewicht wird von der gelenkigen Verbindung zur Mittelsektion getragen. Die gelenkige Verbindung ist dadurch stark belastet. Wenn sich das freie Ende der seitlichen Sektion in der Luft befindet, besteht aber vor Allem das Risiko, dass der Messerbalken das Erntegut nicht mehr an seinem unteren Stängelende, sondern im Bereich der Fruchtstände oder überhaupt nicht mehr schneidet. Das würde unmittelbar zu Erntegutverlusten führen. In dieser Situation kann der Korrekturmodus vorsehen, die Mittelsektion des Schneidwerks über die Tragvorrichtung abzusenken. Die daraus resultierende tiefere Lage der Mittelsektion senkt gleichzeitig auch die Anbindungszone der seitlichen Sektion an die gelenkige Verbindung mit nach unten ab. Wenn es gelingt, die Mittelsektion im Korrekturmodus so weit abzusenken, dass die seitliche Sektion wieder selbst auf dem Boden abgestützt ist, so verringert sich der Knickwinkel zwischen der seitlichen Sektion und der Mittelsektion. Bei dieser Verringerung des Knickwinkels wird der mechanische Anschlag entlastet. Durch das damit erreichte Anheben des freien Endes der seitlichen Sektion verringert sich aber auch das Risiko, dass sich das freie Ende des Schneidwerks bei einer erneuten Anhebung des Bodens während der Vorfahrt der Erntemaschine in diesen hineinbohren könnte.

Wenn das freie Ende einer seitlichen Sektion so weit nach oben verschwenkt ist, dass der Sensor das Erreichen des Grenzwerts meldet, droht eine Durchbiegung des Schneidwerks, oder das freie Ende der seitlichen Sektion könnte bei einer weiteren Vorfahrt der Erntemaschine in den Boden gerammt werden. Um das zu vermeiden, ist es möglich, die Mittelsektion im Korrekturmodus über die Tragvorrichtung anzuheben. Durch die angehobene Mittelsektion wird auch die Anbindungszone der seitlichen Sektion an die gelenkige Verbindung mit nach oben angehoben. Dadurch wird die gelenkige Verbindung tendenziell entlastet.

Die Auswertevorrichtung gibt im Korrekturmodus ein Stellsignal aus, mit dem die Tragvorrichtung von der Auswertevorrichtung in eine das Schneidwerk um die Längsmittelachse drehende Bewegung verstellt ist. Wenn an die Mittelsektion rechts und links seitliche Sektionen angehängt sind, ist es möglich, dass der erste Sensor einer seitlichen Sektion ein herabhängendes freies Ende dieser seitlichen Sektion meldet, während der zweite Sensor der anderen seitlichen Sektion ein nach oben verschwenktes freies Ende dieser seitlichen Sektion signalisiert. In diesem Fall ist es vorteilhaft, wenn die Auswertevorrichtung das Schneidwerk im Korrekturmodus um die in die Fahrtrichtung weisende Längsmittelachse der Erntemaschine dreht. Dadurch wird das eine Ende der Mittelsektion angehoben und das gegenüberliegende Ende abgesenkt, wodurch beiden seitlichen Sektionen geholfen ist und die gelenkigen Verbindungen dadurch entlastet werden.

Nach einer Ausgestaltung der Erfindung fragt die Auswertevorrichtung im Korrekturmodus die Sensorwerte der laufend den Bodenabstand des Schneidwerks messenden Sensoren ab, ermittelt, ob ein Mindestabstand zum Boden eingehalten ist, und blockiert über eine Sicherungsschaltung eine weitere Absenkung der Tragvorrichtung, wenn die Abfrage der Sensorwerte das Erreichen des Mindestabstands signalisiert. Die Sicherungsschaltung soll sicherstellen, dass der Korrekturmodus nicht dazu führt, dass die Mittelsektion über einen Mindestabstand zum Boden hinaus wegen des Knickwinkels einer oder mehrerer seitlicher Sektionen zur Mittelsektion so weit nach unten abgesenkt wird, dass die Mittelsektion selbst über den Boden schleift, sich mit den Spitzen und dem Messerbalken in den Boden bohrt oder sich auf dem Boden so stark aufschiebt, dass dadurch die Tragvorrichtung belastet wird.

Nach einer Ausgestaltung der Erfindung fragt die Auswertevorrichtung die Sensorwerte der laufend den Bodenabstand des Schneidwerks messenden Sensoren ab, sie vergleicht die Reihe dieser Sensordaten in ihrer Reihenfolge und leitet daraus eine Trendvorhersage einer aus der Messung des Bodenabstands für die Mittelsektion bevorstehenden Verstellrichtung ab, sie fragt die Sensorwerte der die Verschwenkbewegung der seitlichen Sektion laufend überwachenden Sensoren ab, sie vergleicht die Reihe dieser Sensordaten in ihrer Reihenfolge und leitet daraus eine Trendvorhersage einer aus der Messung der Verschwenkbewegungen der seitlichen Sektionen für die Mittelsektion bevorstehenden Verstellrichtung ab, sie leitet beide Trendvorhersagen einem Bandbreitenfilter zu und gibt im Falle eines Ausfalls eines Wertes aus dem Bandbreitenfilter ein Stellsignal aus, mit dem die Tragvorrichtung von der Auswertevorrichtung je nach Ergebnis der Bewertung durch den Bandbreitenfilter nach oben oder unten verstellt wird.

Bei dieser Regelung wartet die Auswertevorrichtung nicht erst ab, bis ein Sensorwert einen Grenzwert erreicht, sondern es werden die Sensorwerte in einem dynamischen Modell miteinander abgeglichen, bei dem Prognosewerte für eine bevorstehende Verstellung der Schneidwerkhöhe in die Regelung mit einbezogen werden. Dadurch kann eine gleichmäßigere Regelung erreicht werden, die nicht so kurzfristig und heftig auf Änderungen von Sensordaten reagiert. Lässt die Trendvorhersage erkennen, dass das Schneidwerk angehoben werden muss, weil der Bodenabstand der Mittelsektion sich dem Mindestabstand annähert, so kann die entsprechende Verstellbewegung schon entsprechend früh ausgelöst werden, wenn die Trendvorhersage für die Verschwenkbewegungen der seitlichen Sektionen im Bandbreitenfilter nicht erkennen lassen, dass eine solche Verstellbewegung zu unerwünschten Knickwinkeln der seitlichen Sektionen führen würde. Wenn die Trendvorhersage der Verschwenkbewegungen der seitlichen Sektionen allerdings erkennen lassen, dass eine Anhebung der Mittelsektion dazu führen könnte, dass der für sie geltende Grenzwert erreicht würde, kann eine Verstellung so lange unterbleiben, bis der Abstandswert für die Mittelsektion tatsächlich den Wert für den Mindestabstand erreicht. Die Korrekturschritte, die dann erfolgen, können aber kleiner gewählt sein, wenn die Trendvorhersage der Verschwenkbewegungen der seitlichen Sektionen im Bandbreitenfilter weiterhin erkennen lassen, dass Grenzwerte überschritten werden oder bereits überschritten sind. Andererseits können großzügigere Verstellbewegungen erfolgen, wenn sich aus dem Bandbreitenfilter ergibt, dass eine größere Verstellbewegung des Bodenabstands der Mittelsektion nicht dazu führt, dass die Knickwinkel der seitlichen Sektionen die Grenzwerte erreichen könnten. Wie vorstehend für die Mittelsektion beschrieben können auch Höhenanpassungen, die sich aus der Trendvorhersage der Verschwenkbewegungen der seitlichen Sektionen als notwendig erkennen lassen, durch den Bandbreitenfilter verstärkt oder gedämpft werden. Die Regelung ist auf einfache Weise durch eine entsprechend programmierte Software möglich.

Nach einer Ausgestaltung der Erfindung sind die an den seitlichen Sektionen angeordneten Stützräder höhenverstellbar ausgebildet, die Höhenverstellung der Stützräder erfolgt über die Auswertevorrichtung, und die Auswertevorrichtung hält das Stützrad im Korrekturmodus der zugehörigen seitlichen Sektion in der aktuellen Lage oder fährt es nach unten aus, wenn ein Sensor für die betreffende seitliche Sektion ein Sensorsignal an die Auswertevorrichtung übermittelt, das anzeigt, dass sich die seitliche Sektion im Bereich ihres unteren Anschlags und/oder des unteren Grenzwertes befindet. Dadurch setzt das betreffende Stützrad früher auf den Boden auf, wenn sich bei der weiteren Vorfahrt der Erntemaschine der Abstand der Unterseite der seitlichen Sektion zum Boden wieder verringert. Das Risiko, dass das betreffende Seitenteil ohne Abstützung durch das zugehörige Stützrad mit dem Boden kollidieren könnte, ist vermindert.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht von schräg hinten auf ein Schneidwerk,
- Fig. 2:: eine Ansicht auf das auf einem flachen Boden aufliegende Schneidwerk,
- Fig. 3:: eine Ansicht auf das eine Mulde durchfahrende Schneidwerk, und
- Fig. 4:: eine Ansicht auf ein eine Kuppe überfahrendes Schneidwerk.

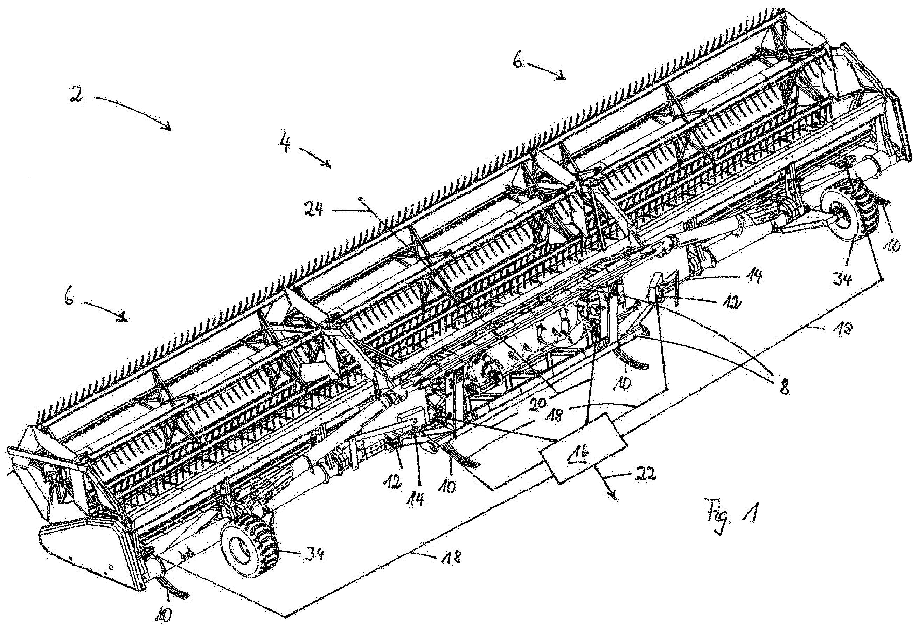

In Fig. 1 ist eine Ansicht auf ein Schneidwerk 2 aus einer Perspektive von schräg hinten gezeigt. Das Schneidwerk 2 besteht im Ausführungsbeispiel aus einer Mittelsektion 4 und zwei seitlich daran angebrachten Sektionen 6. Das Schneidwerk 2 wird über Verbindungelemente 8 mit dem Einzugskanal eines Mähdreschers verbunden.

Das Schneidwerk 2 verfügt im Ausführungsbeispiel über insgesamt vier Sensoren 10, mit denen der Bodenabstand des Schneidwerkes 2 laufend gemessen werden kann. Bei den Sensoren 10 handelt es sich im Ausführungsbeispiel um schwenkbewegliche Bodentaster, die mit einem Drehpotentiometer verbunden sind.

Die Mittelsektion 4 ist mit den seitlichen Sektionen 6 jeweils über eine gelenkige Verbindung 12 verbunden. Die gelenkige Verbindung 12 besteht aus einer Drehachse, um die die seitlichen Sektionen 6 mit ihren jeweiligen freien Enden nach oben oder unten verschwenken können.

An die beiden gelenkigen Verbindungen 12 sind jeweilige Sensoren 14 angeschlossen, mit denen der Knickwinkel ermittelbar ist, in dem eine seitliche Sektion 6 zur Mittelsektion 4 in einem jeweiligen Gebrauchszustand steht.

Das Schneidwerk 2 verfügt über eine Auswertevorrichtung 16, die über Verbindungsleitungen 18 mit den Sensoren 10 und über Verbindungsleitungen 20 mit den Sensoren 14 verbunden ist. Über die Verbindungsleitungen 18, 20 können die jeweiligen Sensorwerte von den Sensoren 10, 14 an die Auswertevorrichtung 16 übermittelt werden.

In der Auswertevorrichtung 16 rechnet ein Computer mit einer entsprechend geeigneten Software die Sensorsignale der Sensoren 10 in Stellbefehle zur Veränderung der Höhenlage der Vorrichtung zur Höhenverstellung um. Diese Stellbefehle werden über eine Verbindungsleitung 22 an die Vorrichtung zur Höhenverstellung weitergeleitet, die sich in dem in der Fig. 1 nicht näher dargestellten Mähdrescher befindet. Die Verbindungsleitung 22 bezeichnet also eine Schnittstelle zur Elektronik und Aktorik der Erntemaschine, an die das Schneidwerk 2 angebaut wird.

Die Vorrichtung zur Höhenverstellung kann je nach ihrer Ausgestaltung das Schneidwerk 2 nicht nur anheben und absenken, zusätzlich ist es auch möglich, das Schneidwerk 2 um die Längsmittelachse 24 zu drehen, wenn dies aufgrund der Sensordaten der Sensoren 10 und/oder der Sensoren 14 als erforderlich erscheint.

Das Fahrwerk des Schneidwerks 2 besteht aus den beiden Stützrädern 34, die jeweils einer seitlichen Sektion zugeordnet sind. Die Stützräder 34 sind im Ausführungsbeispiel höhenverstellbar ausgeführt.

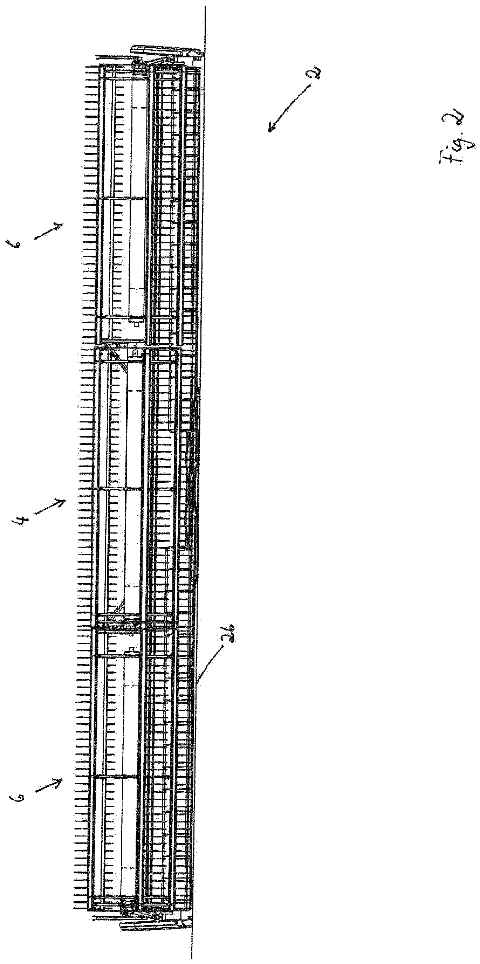

In Fig. 2 ist das Schneidwerk 2 aus einer Ansicht von vorne in einer Erntesituation gezeigt, in der das Schneidwerk 2 über einen flachen Boden 26 bewegt wird. Wegen des flachen Bodens 26 ergibt sich zwischen der Mittelsektion 4 und den seitlichen Sektionen 6 kein Knickwinkel.

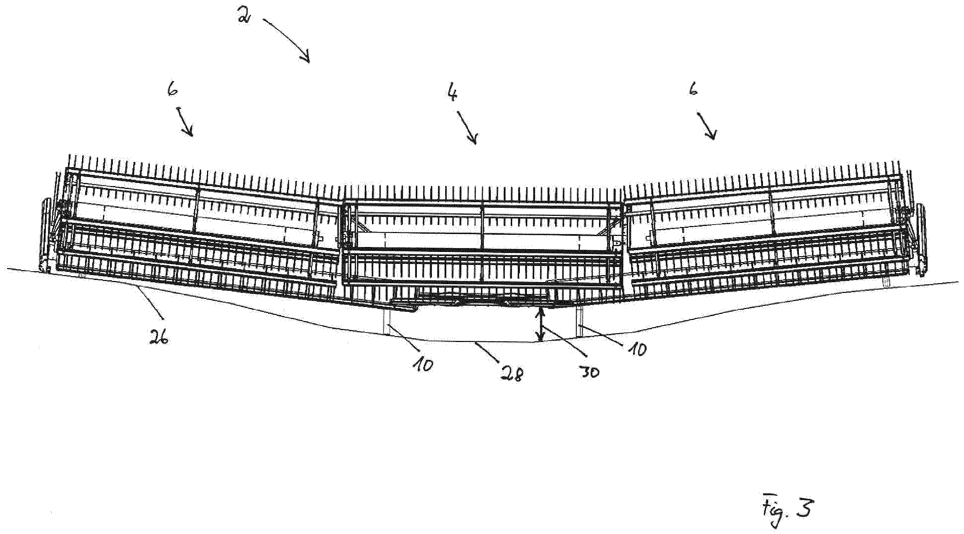

In Fig. 3 ist eine mögliche Erntesituation gezeigt, in der das Schneidwerk 2 eine Mulde 28 durchfährt. Während sich die Mittelsektion 4 in einer nahezu waagerechten Lage befindet, sind die beiden seitlichen Sektionen 6 mit ihren freien Enden jeweils nach oben verschwenkt, so dass sich zwischen der Mittelsektion 4 und den beiden seitlichen Sektionen 6 ein Knickwinkel von etwa 10° eingestellt hat. Während der Bodenabstand 30 im Bereich der Mittelsektion 4 so groß ist, dass das Schneidwerk 2 bei diesem Abstandsmaß noch abgesenkt werden könnte, ist im Bereich der freien Enden der seitlichen Sektionen 6 der Bodenabstand 30 so gering, dass bei einer weiteren Absenkung der Mittelsektion 4 nach unten die Bauteile der gelenkigen Verbindung 12 einer erheblichen Belastung ausgesetzt würden. Bei einer weiteren Absenkung der Mittelsektion 4 würden die äußeren Enden der seitlichen Sektionen 6 heftig auf dem Boden 26 schleifen, was zu Beschädigungen am Schneidwerk 2 und der mähdrescherseitigen Tragvorrichtung führen könnte. In dieser Situation soll der Korrekturmodus in der Auswertevorrichtung 16 verhindern, dass die Mittelsektion 4 noch weiter nach unten abgesenkt wird. Wenn die Sensoren 14 in dieser Gebrauchslage des Schneidwerks das Erreichen eines Grenzwertes melden, ist es vielmehr so, dass die Auswertevorrichtung 16 in den Korrekturmodus umschaltet und in diesem Korrekturmodus ein Stellsignal an die Tragvorrichtung ausgibt, bei dem das Schneidwerk 2 in eine Richtung nach oben angehoben wird, um die gelenkigen Verbindungen 12 zwischen den seitlichen Sektionen 6 und der Mittelsektion 4 zu entlasten.

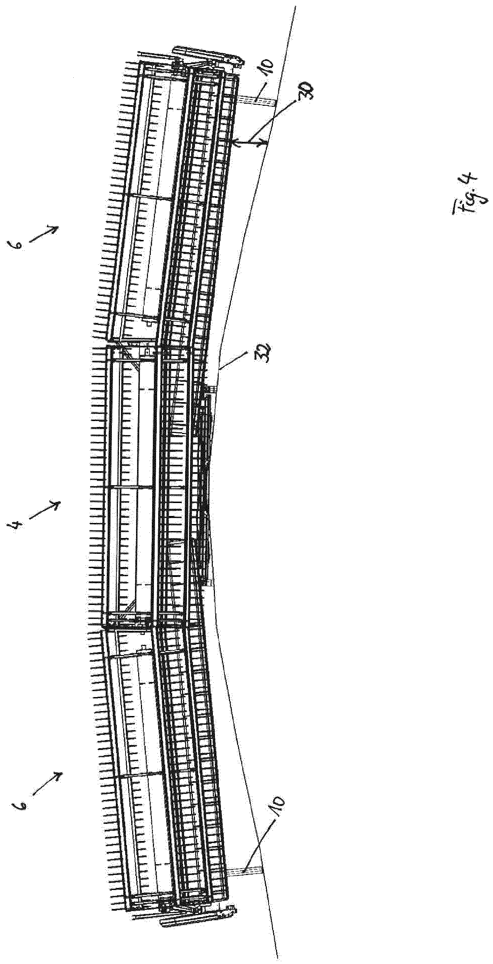

In Fig. 4 ist das Schneidwerk 2 beim Überfahren einer Kuppe 32 gezeigt. In dieser Ansicht sind die Stützräder 34 nicht gezeigt. In dieser Ansicht ist erkennbar, dass der Bodenabstand 30 im Bereich der freien Enden der seitlichen Sektionen 6 sehr groß ist, während der im Bereich der Mittelsektion 4 im mittleren Bereich auf einen Mindestabstand reduziert ist. In dieser Erntesituation würden die äußeren Sensoren 10 der Auswertevorrichtung 16 melden, dass ein weiteres Anheben der Stützräder 34 des Fahrwerks erforderlich ist, um wieder einen Bodenkontakt der jeweiligen seitlichen Sektion 6 herzustellen, obwohl die seitlichen Sektionen 6 schon mechanisch begrenzt frei über dem Boden schweben. Die Auswertevorrichtung 16 hat in dieser Erntesituation allerdings Meldungen der Knickwinkel-Sensoren 14 vorliegen, wonach bei den Knickwinkeln der seitlichen Sektionen 6 ein Grenzwert überschritten ist. In dieser Erntesituation würde die Auswertevorrichtung 16 wegen der Sensordaten der äußeren Sensoren 10 zwar auch dazu tendieren, die Stützräder 34 weiter anzuheben. Über eine Sicherungsschaltung kann hier aber gewährleistet werden, dass die seitlichen Stützräder 34 nicht weiter angehoben werden, sondern in ihrer Stellung verbleiben oder sogar nach unten ausgefahren werden. Dadurch befinden sie sich nach dem Ende dieser Erntesituation in einer Stellung, die die erneute Übernahme der Höhenführung für die betreffende seitliche Sektion 6 ohne eine deutliche Anpassung der Höhenlage der Stützräder 34 ermöglichen.

Die Erfindung ist nicht auf das vorstehende Ausführungsbeispiel beschränkt. Dem Fachmann bereitet es keine Schwierigkeiten, das Ausführungsbeispiel auf eine ihm geeignet erscheinende Weise abzuwandeln, um sie an einen konkreten Anwendungsfall anzupassen.

## Patentansprüche

1. Aus mehreren Sektionen (4, 6) zusammengesetztes, an eine Tragvorrichtung einer Erntemaschine anbaubares Schneidwerk (2), mit einer Mittelsektion (4), die Verbindungselemente (8) aufweist, mit denen die Mittelsektion (4) an eine Tragvorrichtung der Erntemaschine anbaubar ist, und zumindest einer seitlichen Sektion (6), die über eine gelenkige Verbindung (12) mit der Mittelsektion (4) verbunden ist und um die die seitliche Sektion (6) zwischen einem unteren und einem oberen Grenzwert verschwenken kann, wobei die Tragvorrichtung eine Vorrichtung zur Höhenverstellung aufweist, deren Stellbewegungen von einer Auswertevorrichtung (16) gesteuert sind, die mit Sensoren (10) verbunden ist, die bei der Vorfahrt der Erntemaschine laufend den Bodenabstand (30) einer oder mehrerer Sektionen (4, 6) des Schneidwerks (2) messen, die Auswertevorrichtung (16) die Sensorsignale der Sensoren (10) in Stellbefehle zur Veränderung der Höhenlage der Vorrichtung zur Höhenverstellung umrechnet und diese Stellbefehle an eine Aktorik der Vorrichtung zur Höhenverstellung übermittelt, das Schneidwerk (2) einen Sensor (14) aufweist, der bei einer Verschwenkbewegung der seitlichen Sektion (6) zumindest dann ein Sensorsignal über ein Kommunikationsmittel an die Auswertevorrichtung (16) übermittelt, wenn bei der Verschwenkbewegung der seitlichen Sektion (6) zur Mittelsektion (4) ein Grenzwert erreicht ist, die Auswertevorrichtung (16) eine Auswerteschaltung aufweist, die die Auswertevorrichtung (16) beim Vorliegen eines entsprechenden Sensorsignals in einen Korrekturmodus für die Höhenverstellung der Tragvorrichtung schaltet, und die Auswertevorrichtung (16) im Korrekturmodus ein Stellsignal ausgibt, mit dem die Tragvorrichtung von der Auswertevorrichtung (16) je nach Sensorsignal nach oben oder unten verstellt wird, und die Auswertevorrichtung (16) im Korrekturmodus ein Stellsignal ausgibt, mit dem die Tragvorrichtung von der Auswertevorrichtung (16) in eine das Schneidwerk (2) um die Längsmittelachse (24) drehende Bewegung verstellt ist, **dadurch gekennzeichnet, dass** der Sensor zur Überwachung der Verschwenkung ein einfacher mechanischer, elektrischer oder elektronischer Schalter, der jeweils ein Schaltsignal übermittelt, wenn die seitliche Sektion bei ihrer Verschwenkbewegung gegen einen Anschlag schlägt, oder als Drehwinkelsensor ausgebildet ist, der getaktet oder kontinuierlich Schwenkwinkel misst und diese an die Auswertevorrichtung übermittelt.

2. Schneidwerk (2) nach Anspruch 1, **dadurch gekennzeichnet, dass** die Auswertevorrichtung (16) im Korrekturmodus die Sensorwerte der laufend den Bodenabstand (30) des Schneidwerks (2) messenden Sensoren (10) abfragt, ermittelt, ob ein Mindestabstand zum Boden (26) eingehalten ist, und über eine Sicherungsschaltung eine weitere Absenkung der Tragvorrichtung blockiert, wenn die Abfrage der Sensorwerte das Erreichen des Mindestabstands signalisiert.

3. Schneidwerk (2) nach einem der vorhergehenden Ansprüche, **dadurch gekennzeichnet, dass** die Auswertevorrichtung (16) die Sensorwerte der laufend den Bodenabstand (30) des Schneidwerks (2) messenden Sensoren (10) abfragt, die Reihe dieser Sensordaten in ihrer Reihenfolge vergleicht und daraus eine Trendvorhersage einer aus der Messung des Bodenabstands (30) für die Mittelsektion (4) bevorstehenden Verstellrichtung ableitet, die Sensorwerte der die Verschwenkbewegung der seitlichen Sektion (6) laufend überwachenden Sensoren abfragt, die Reihe dieser Sensordaten in ihrer Reihenfolge vergleicht und daraus eine Trendvorhersage einer aus der Messung der Verschwenkbewegungen der seitlichen Sektionen (6) für die Mittelsektion (4) bevorstehenden Verstellrichtung ableitet, beide Trendvorhersagen einem Bandbreitenfilter zuleitet und im Falle eines Ausfalls eines Wertes aus dem Bandbreitenfilter ein Stellsignal ausgibt, mit dem die Tragvorrichtung von der Auswertevorrichtung (16) je nach Ergebnis der Bewertung durch den Bandbreitenfilter nach oben oder unten verstellt wird.

4. Schneidwerk (2) nach einem der vorhergehenden Ansprüche, **dadurch gekennzeichnet, dass** die an den seitlichen Sektionen (6) angeordneten Stützräder (34) höhenverstellbar ausgebildet sind, die Höhenverstellung der Stützräder (34) über die Auswertevorrichtung (16) erfolgt, und die Auswertevorrichtung (16) hält das Stützrad (34) im Korrekturmodus der zugehörigen seitlichen Sektion (6) in der aktuellen Lage oder fährt es nach unten aus, wenn ein Sensor (14) für die betreffende seitliche Sektion (6) ein Sensorsignal an die Auswertevorrichtung (16) übermittelt, das anzeigt, dass sich die seitliche Sektion (6) im Bereich ihres unteren Anschlags und/oder des unteren Grenzwertes befindet.

5. Verfahren zur Höhenregelung eines Schneidwerks (2) nach dem Oberbegriff des Anspruchs 1, wobei das Schneidwerk (2) eine Auswertevorrichtung (16) aufweist, mit der softwaregestützt ein Sensor (14) abgefragt wird, der bei einer Verschwenkbewegung der seitlichen Sektion (6) zumindest dann ein Sensorsignal über ein Kommunikationsmittel an die Auswertevorrichtung (16) übermittelt, wenn bei der Verschwenkbewegung der seitlichen Sektion (6) zur Mittelsektion (4) ein Grenzwert erreicht ist, die Auswertevorrichtung (16) über eine Auswerteschaltung beim Vorliegen eines entsprechenden Sensorsignals in einen Korrekturmodus für die Höhenverstellung der Tragvorrichtung schaltet, und die Auswertevorrichtung (16) im Korrekturmodus ein Stellsignal ausgibt, mit dem die Tragvorrichtung von der Auswertevorrichtung (16) je nach Sensorsignal nach oben oder unten verstellt wird, und die Auswertevorrichtung (16) im Korrekturmodus ein Stellsignal ausgibt, mit dem die Tragvorrichtung von der Auswertevorrichtung (16) in eine das Schneidwerk (2) um die Längsmittelachse (24) drehende Bewegung verstellt wird, **dadurch gekennzeichnet, dass** als Sensor zur Überwachung der Verschwenkung ein einfacher mechanischer, elektrischer oder elektronischer Schalter, der jeweils ein Schaltsignal übermittelt, wenn die seitliche Sektion bei ihrer Verschwenkbewegung gegen einen Anschlag schlägt, oder ein Drehwinkelsensor, der getaktet oder kontinuierlich Schwenkwinkel misst und diese an die Auswertevorrichtung übermittelt, verwendet ist.

6. Verfahren nach Anspruch 5, **dadurch gekennzeichnet, dass** ein Schneidwerk nach einem der Merkmale 2 bis 4 verwendet wird.

## Claims

1. A cutting mechanism (2) composed of multiple sections (4, 6) and attachable to a supporting device of a harvesting machine, having a middle section (4), which has connecting elements (8), using which the middle section (4) is attachable to a supporting device of the harvesting machine, and at least one lateral section (6), which is connected via an articulated connection (12) to the middle section (4) and around which the lateral section (6) can pivot between a lower and an upper limiting value, wherein the supporting device has a device for height adjustment, the positioning movements of which are controlled by an evaluation device (16), which is connected to sensors (10), which, during the forward travel of the harvesting machine, continuously measure the ground clearance (30) of one or more sections (4, 6) of the cutting mechanism (2), the evaluation device (16) converts the sensor signals of the sensors (10) into positioning commands to change the vertical position of the device for height adjustment and transmits these positioning commands to an actuator of the device for height adjustment, the cutting mechanism (2) has a sensor (14), which, during a pivot movement of the lateral section (6), transmits a sensor signal via a communication means to the evaluation device (16) at least if - during the pivot movement of the lateral section (6) in relation to the middle section (4) - a limiting value is reached, the evaluation device (16) has an evaluation circuit, which switches the evaluation device (16) into a correction mode for the height adjustment of the supporting device upon the presence of a corresponding sensor signal, and the evaluation device (16) outputs a positioning signal in the correction mode, using which the supporting device is adjusted upward or downward by the evaluation device (16) depending on the sensor signal, and the evaluation device (16) outputs a positioning signal in the correction mode, using which the supporting device is adjusted by the evaluation device (16) in a movement rotating the cutting mechanism (2) around the longitudinal center axis (24), **characterized in that** the sensor for monitoring the pivot is designed as a simple mechanical, electrical, or electronic switch, which transmits a switching signal in each case when the lateral section strikes against a stop during its pivot movement, or is designed as a pivot angle sensor, which measures pivot angles cyclically or continuously and transmits these angles to the evaluation device.

2. The cutting mechanism (2) according to Claim 1, **characterized in that** the evaluation device (16) in the correction mode queries the sensor values of the sensors (10) measuring the ground clearance (30) of the cutting mechanism (2), ascertains whether a minimum distance to the ground (26) is maintained, and blocks further lowering of the supporting device via a safety circuit if the query of the sensor values signals reaching the minimum distance.

3. The cutting mechanism (2) according to any one of the preceding claims, **characterized in that** the evaluation device (16) queries the sensor values of the sensors (10) continuously measuring the ground clearance (30) of the cutting mechanism (2), compares the series of these sensor data in their sequence, and derives therefrom a trend prediction of an adjustment direction upcoming for the middle section (4) from the measurement of the ground clearance (30), queries the sensor values of the sensors continuously monitoring the pivot movement of the lateral section (6), compares the series of the sensor data in their sequence, and derives therefrom a trend prediction of an adjustment direction upcoming for the middle section (4) from the measurement of the pivot movement of the lateral sections (6), supplies both trend predictions to a bandwidth filter and - in the case of a failure of a value from the bandwidth filter - outputs a positioning signal, using which the supporting device is adjusted upward or downward by the evaluation device (16) depending on the results of the assessment by the bandwidth filter.

4. The cutting mechanism (2) according to any one of the preceding claims, **characterized in that** the support wheels (34) arranged on the lateral sections (6) are designed to be adjustable in height, the height adjustment of the support wheels (34) takes place via the evaluation device (16), and the evaluation device (16) holds the support wheel (34), in the correction mode of the associated lateral section (6), in the current position or extends it downward if a sensor (14) for the relevant lateral section (6) transmits a sensor signal to the evaluation device (16) which indicates that the lateral section (6) is located in the region of its lower stop and/or the lower limiting value.

5. A method for height regulation of a cutting mechanism (2) according to the preamble of Claim 1, wherein the cutting mechanism (2) has an evaluation device (16), using which a sensor (14) is queried with software support, which sensor transmits a sensor signal via a communication means to the evaluation device (16) during a pivot movement of the lateral section (6) at least if a limiting value is reached during the pivot movement of the lateral section (6) in relation to the middle section (4), the evaluation device (16) switches into a correction mode for the height adjustment of the supporting device via an evaluation circuit upon the presence of a corresponding sensor signal, and the evaluation device (16), in the correction mode, outputs a positioning signal, using which the supporting device is adjusted upward or downward by the evaluation device (16) depending on the sensor signal, and the evaluation device (16), in the correction mode, outputs a positioning signal, using which the supporting device is adjusted by the evaluation device (16) in a movement rotating the cutting mechanism (2) around the longitudinal center axis (24), **characterized in that** a simple mechanical, electrical, or electronic switch, which transmits a switching signal in each case when the lateral section strikes against a stop during its pivot movement, or a pivot angle sensor, which measures pivot angles cyclically or continuously and transmits these angles to the evaluation device, is used as the sensor for monitoring the pivot.

6. The method according to Claim 5, **characterized in that** a cutting mechanism according to any one of Claims 2 to 4 is used.

## Revendications

1. Outil de coupe (2), composé de plusieurs sections (4, 6), pouvant être fixé à un dispositif porteur d'une moissonneuse, et étant pourvu d'une section centrale (4) qui comporte des éléments de liaison (8) au moyen desquels la section centrale (4) peut être fixée à un dispositif porteur de la moissonneuse, et d'au moins une section latérale (6) qui est reliée à la section centrale (4) par une liaison articulée (12) et autour de laquelle section centrale la section latérale (6) peut pivoter entre une valeur limite inférieure et supérieure, dans lequel le dispositif porteur comporte un dispositif de réglage en hauteur, dont les mouvements de réglage sont commandés par un dispositif d'évaluation (16) qui est relié à des capteurs (10) mesurant en continu la distance au sol (30) d'une ou plusieurs sections (4, 6) de l'outil de coupe (2) au fur et à mesure que la moissonneuse avance, le dispositif d'évaluation (16) convertit les signaux des capteurs (10) en commandes de réglage pour modifier la hauteur du dispositif de réglage en hauteur et transfère ces commandes de réglage à un actionneur du dispositif de réglage en hauteur, l'outil de coupe (2) comporte un capteur (14) qui transmet au moins un signal de capteur au dispositif d'évaluation (16) par un moyen de communication lors d'un mouvement de pivotement de la section latérale (6) lorsqu'une valeur limite est atteinte lors du mouvement de pivotement de la section latérale (6) vers la section centrale (4), le dispositif d'évaluation (16) comporte un circuit d'évaluation qui commute le dispositif d'évaluation (16) dans un mode de correction pour le réglage en hauteur du dispositif porteur en présence d'un signal de capteur correspondant, et le dispositif d'évaluation (16) émet un signal de commande dans le mode de correction, avec lequel le dispositif porteur est réglé vers le haut ou vers le bas par le dispositif d'évaluation (16) en fonction du signal de capteur et le dispositif d'évaluation (16) émet un signal de commande dans le mode de correction avec lequel le dispositif porteur est réglé par le dispositif d'évaluation (16) dans un mouvement faisant tourner l'outil de coupe (2) autour de l'axe longitudinal central (24), **caractérisé en ce que** le capteur destiné à surveiller le pivotement est un simple commutateur mécanique, électrique ou électronique qui transmet un signal de commutation lorsque la section latérale vient en butée lors de son mouvement de pivotement, ou est conçu comme un capteur d'angle de rotation qui mesure l'angle de pivotement de manière cadencée ou continue et le transmet au dispositif d'évaluation.

2. Outil de coupe (2) selon la revendication 1, **caractérisé en ce que** le dispositif d'évaluation (16) interroge dans le mode de correction les valeurs des capteurs (10) mesurant en continu la distance au sol (30) de l'outil de coupe (2), détermine si une distance minimale au sol (26) est respectée, et bloque la descente du dispositif porteur au moyen d'un circuit de sécurité lorsque l'interrogation des valeurs de capteur signale que la distance minimale a été atteinte.

3. Outil de coupe (2) selon l'une des revendications précédentes, **caractérisé en ce que** le dispositif d'évaluation (16) interroge les valeurs des capteurs (10) mesurant en continu la distance au sol (30) de l'outil de coupe (2), compare la séquence de ces données de capteurs dans l'ordre où elles sont émises et les utilise pour en déduire une prédiction de tendance d'une direction de réglage imminente à partir de la mesure de la distance au sol (30) pour la section centrale (4), interroge les valeurs des capteurs surveillant en continu le mouvement de pivotement de la section latérale (6), compare la séquence de ces données de capteur dans l'ordre où elles sont émises et, à partir de cela, déduit une prédiction de tendance d'une direction de réglage imminente à partir de la mesure des mouvements de pivotement des sections latérales (6) pour la section centrale (4), envoie les deux prédictions de tendance à un filtre de bande passante et, en cas de défaillance d'une valeur du filtre de bande passante, émet un signal de commande au moyen duquel le dispositif porteur est réglé vers le haut ou vers le bas par le dispositif d'évaluation (16) en fonction du résultat de l'évaluation par le filtre de bande passante.

4. Outil de coupe (2) selon l'une des revendications précédentes, **caractérisé en ce que** les roues d'appui (34) disposées sur les sections latérales (6) sont conçues pour être réglables en hauteur, le réglage en hauteur des roues d'appui (34) s'effectue au moyen du dispositif d'évaluation (16), et le dispositif d'évaluation (16) maintient la roue d'appui (34) dans la position actuelle dans le mode de correction de la section latérale associée (6) ou l'étend vers le bas lorsqu'un capteur (14) pour la section latérale concernée (6) transmet au dispositif d'évaluation (16) un signal de capteur, qui indique que la section latérale (6) se trouve dans la zone de sa butée inférieure et/ou de la valeur limite inférieure.

5. Procédé pour régler la hauteur d'un outil de coupe (2) selon le préambule de la revendication 1, dans lequel l'outil de coupe (2) comporte un dispositif d'évaluation (16) au moyen duquel un logiciel interroge un capteur (14), qui transmet lors du mouvement de pivotement de la section latérale (6), au moins un signal de capteur au dispositif d'évaluation (16) par un moyen de communication, lorsqu'une valeur limite est atteinte lors du mouvement de pivotement de la section latérale (6) vers la section centrale (4), le dispositif d'évaluation (16) commute au moyen du circuit d'évaluation dans un mode de correction pour le réglage en hauteur du dispositif porteur en présence d'un signal de capteur correspondant, et le dispositif d'évaluation (16) émet un signal de commande dans le mode de correction, avec lequel le dispositif porteur est réglé vers le haut ou vers le bas par le dispositif d'évaluation (16) en fonction du signal de capteur et le dispositif d'évaluation (16) émet un signal de commande dans le mode de correction avec lequel le dispositif porteur est réglé par le dispositif d'évaluation (16) dans un mouvement faisant tourner l'outil de coupe (2) autour de l'axe longitudinal central (24), **caractérisé en ce que** le capteur destiné à surveiller le pivotement utilisé est un simple commutateur mécanique, électrique ou électronique qui transmet un signal de commutation lorsque la section latérale vient en butée lors de son mouvement de pivotement, ou est un capteur d'angle de rotation qui mesure l'angle de pivotement de manière cadencée ou continue et le transmet au dispositif d'évaluation.

6. Procédé selon la revendication 5, **caractérisé en ce qu'**un outil de coupe est utilisé selon l'une des revendications 2 à 4.
